# FASCICULE DE BREVET EUROPEEN

(11) **EP 3 107 748 B1**
(45) Date de publication et mention de la délivrance du brevet: **18.07.2018**
(21) Numéro de dépôt: 15707697.7
(22) Date de dépôt: 05.02.2015
(51) Int. Cl.: B60K 5/12

(54) **DISPOSITIF DE SUSPENSION D'UN GROUPE MOTOPROPULSEUR DE VÉHICULE AUTOMOBILE**
VORRICHTUNG ZUR AUFHÄNGUNG EINES ANTRIEBSSTRANGS EINES KRAFTFAHRZEUGS
DEVICE FOR THE SUSPENSION OF A POWER TRAIN OF A MOTOR VEHICLE

(30) Priorité: 17.02.2014 FR 1451223
(43) Date de publication de la demande: 28.12.2016
(73) Titulaire: PSA Automobiles SA, 78300 Poissy (FR)
(72) Inventeur: CHALVET, Manuel, F-75015 Paris 15 (FR); MAROILLE, Sylvain, F-94120 Fontenay Sous Bois (FR)
(74) Mandataire: Rosenberg, Muriel Sylvie
(86) Numéro de dépôt international: PCT/FR2015/050276
(87) Numéro de publication internationale: WO 2015/121567

(56) Documents cités:
- WO-A1-2006/070440
- DE-A1-102006 003 837
- JP-A- S5 914 511

## Description

L'invention concerne un dispositif de suspension d'un groupe motopropulseur de véhicule automobile, de type comprenant au moins une biellette anti-couple. Elle concerne également un véhicule automobile, dans lequel le groupe motopropulseur est suspendu à la structure du véhicule par un tel dispositif de suspension.

Dans les véhicules automobiles, les groupes motopropulseurs sont habituellement fixés à la structure du véhicule à l'aide d'une architecture dite « pendulée ». Cette architecture est le plus souvent constituée de cales porteuses fixées sur le brancard et d'une biellette de reprise de couple ou « biellette anti-couple » ou « biellette de liaison » reliant le groupe motopropulseur au berceau du véhicule. Les cales porteuses ont pour fonction de reprendre la masse du groupe motopropulseur et les efforts verticaux sur ce dernier. La biellette a pour fonction de reprendre le couple de débattement du groupe motopropulseur en travaillant dans l'axe X du véhicule (horizontal).

La biellette de reprise de couple est composée de deux articulations reliées par le corps de biellette métallique, horizontal, avec un entraxe de l'ordre de 120 mm entre les axes des deux articulations. Entre les deux articulations est interposée, de manière classique, une masse en matériau souple et élastiquement déformable, de préférence en élastomère.

Le travail de la biellette s'effectue selon l'axe longitudinal de la biellette, c'est-à-dire la ligne reliant la petite articulation à la grosse articulation. La biellette doit travailler dans un axe quasiment horizontal, c'est-à-dire selon la direction en « X » du véhicule. Un angle trop important de travail de la biellette (par rapport à l'horizontale) aurait les conséquences dommageables suivantes :
- un travail en torsion de l'élastomère de la grosse articulation susceptible d'entraîner des problèmes de tenue en endurance et de prestation (filtrage sous charge dégradé), et
- une taille importante de la fenêtre dans le berceau pour gérer les proximités entre la biellette et le berceau, lors des débattements de la biellette.

On a déjà cherché à réaliser une suspension de groupe motopropulseur de véhicule automobile, de façon simple, efficace et fiable.

Ainsi, on connaît, selon le document FR 2 744 677, un dispositif de suspension d'un groupe motopropulseur de véhicule automobile, qui comporte une biellette anti-couple reliant le groupe motopropulseur à la structure du véhicule par deux articulations dont l'une au moins est élastique. Une de ces articulations est portée par une pièce de liaison qui est fixée au groupe motopropulseur ou à la structure du véhicule par au moins deux vis. L'une de ces deux vis constitue pour la pièce de liaison un pivot d'axe perpendiculaire à la ligne d'action de la biellette. Au moins une autre de ces vis traverse la pièce de liaison par une ouverture en permettant de régler, avant serrage des vis, la position de cette pièce et donc la position de repos de la biellette. Une des deux articulations comporte un manchon élastique dont la flexibilité dans la direction de la ligne d'action de la biellette est faible pour des petits déplacements de part et d'autre de la position de repos de la biellette et est fortement décroissante pour des débattements plus importants.

On connaît également, selon le document CN 1810534, une biellette de support moteur, de type à axes perpendiculaires, laquelle biellette présente une partie annulaire sur laquelle est montée une pièce élastique à l'intérieur d'une entretoise biseautée.

Le document WO-A-2006 070440, qui sert de base à la présentation en deux parties de la revendication 1, divulgue un dispositif de liaison comportant un bras et deux sections tubulaires.

Le document JP-A-S59 14511 divulgue un dispositif de suspension d'un véhicule.

Le document DE-A-10 2006 003 837 divulgue une suspension de groupe motopropulseur.

Toutefois, les solutions techniques de suspension brièvement décrites ci-dessus présentent des inconvénients comme le fait, notamment, de ne pas permettre de réduire substantiellement le débattement angulaire de la biellette. Ce qui a pour conséquence d'empêcher de réduire la taille de la fenêtre dans le berceau du véhicule.

Le but de la présente invention est de fournir un dispositif de suspension d'un groupe motopropulseur de véhicule automobile, qui permette d'obvier à ces inconvénients.

Un autre but de la présente invention est de fournir un tel dispositif de suspension, qui permette une meilleure tenue en endurance, un gain en prestation, et qui soit plus léger que les dispositifs de suspension équivalents de l'art antérieur.

Enfin, c'est également un but de la présente invention de fournir un tel dispositif de suspension, qui soit de conception et de réalisation simples, qui soit robuste, efficace, fiable et économique.

Pour parvenir à ces buts, la présente invention a pour objet un dispositif de suspension selon la revendication 1.

Dans l'expression « prise en chape » relative à la liaison mécanique de la grosse articulation, on entend dans la suite du présent texte une chape mécanique, c'est-à-dire la fixation d'une pièce (ici la grosse articulation de la biellette) enserrée entre deux faces d'une autre pièce (ici le berceau du véhicule).

Selon un mode préféré de réalisation de l'invention, l'insert est rigidement fixé sur le berceau par l'intermédiaire d'un alésage de l'insert pour le passage d'un moyen de fixation, ledit alésage reliant les deux faces latérales de l'insert et étant d'axe perpendiculaire auxdites surfaces planes de prise en chape du berceau.

L'insert est avantageusement réalisé en métal, par exemple en aluminium, ou bien en acier, ou encore en fonte.

A titre d'exemple de réalisation non limitatif de l'objet et de la portée de la présente invention, l'insert métallique peut être de forme cylindrique.

L'insert est inséré dans une bague en élastomère de la grosse articulation de la biellette anti-couple, laquelle bague forme ladite masse en matériau souple et élastiquement déformable interposée entre les deux articulations. Ainsi, la structure de la présente invention permet un travail de l'élastomère selon l'axe longitudinal de la biellette.

Le moyen de fixation traversant l'alésage de l'insert peut avantageusement être une vis de fixation, ou un moyen équivalent.

De préférence, ledit angle d'orientation de la biellette peut être de l'ordre de 5° d'angle.

La présente invention a aussi pour objet un véhicule automobile, dans lequel le groupe motopropulseur est suspendu à la structure dudit véhicule par un dispositif de suspension à biellette anti-couple conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est un schéma illustrant le travail d'une biellette anti-couple de groupe motopropulseur de véhicule automobile,
- la figure 2 est un schéma illustrant la direction de travail de la biellette,
- la figure 3 est un schéma illustrant une solution technique différente de celle de la présente invention, dans laquelle la biellette est inclinée par rapport au plan horizontal,
- la figure 4 est une vue en coupe, schématique, d'un exemple de réalisation d'une biellette anti-couple selon la présente invention, et
- la figure 5 est une vue en perspective, schématique, de l'exemple de biellette anti-couple de la figure 4.

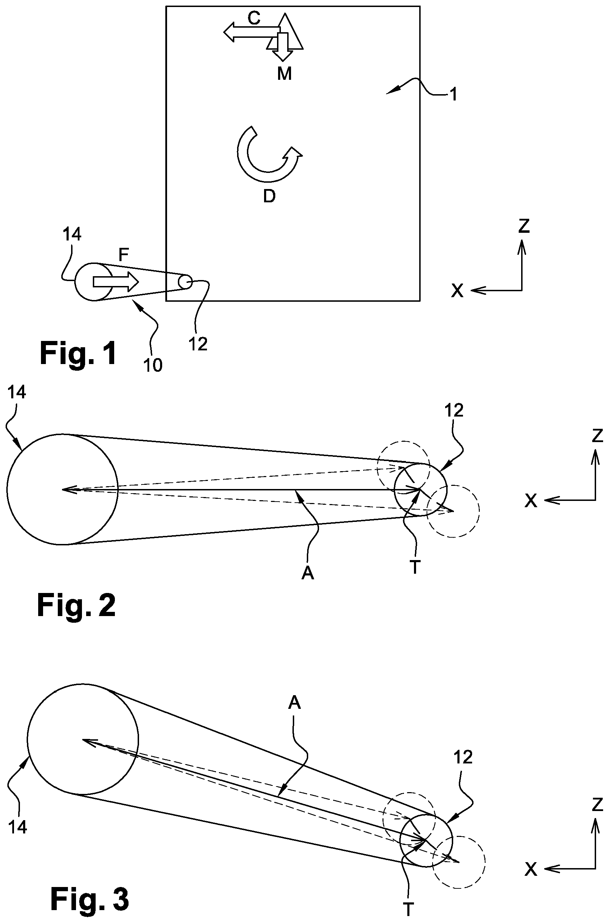

En référence aux schémas des figures 1 et 2, on a illustré le problème technique auquel la présente invention apporte une solution. Dans ce schéma, la référence 1 illustre, de façon très schématique, un groupe motopropulseur de véhicule automobile et la référence 10 une biellette anti-couple de suspension du groupe motopropulseur 1 sur la structure du véhicule (non représentée). La biellette 10 comporte deux articulations référencées 12 et 14, à savoir une première articulation 12, jouant un rôle de pivot sur le groupe motopropulseur, par l'intermédiaire d'une chape non représentée, par exemple, et une seconde articulation 14, dite «grosse articulation », qui est d'encombrement plus important que ladite première articulation et qui est prise en chape sur le berceau du véhicule. Le débattement en marche du groupe motopropulseur 1 est illustré par la flèche « D ». En conséquence de ce débattement, des efforts sont appliqués sur la biellette 10, la flèche « F » illustrant le sens de travail de la biellette sensiblement selon l'axe longitudinal de cette dernière, c'est-à-dire selon la ligne joignant les axes des deux articulations 12 et 14.

En référence encore au dessin de la figure 1, on a illustré par la flèche « M » la masse du groupe motopropulseur et les efforts verticaux sur ce dernier repris, comme déjà mentionné précédemment, par les cales porteuses, la flèche « C » illustrant le couple de travail du groupe motopropulseur selon l'axe X du véhicule (horizontal).

La figure 2 est une vue agrandie de la biellette 10 de la figure 1. La référence « A » désigne l'axe longitudinal de la biellette joignant les axes des deux articulations 12 et 14. La référence « T » désigne la trajectoire de l'axe de la petite articulation 12.

Idéalement, la petite articulation 12 devrait se situer de telle sorte que sa trajectoire « T » soit dans l'axe longitudinal de la biellette 10. Toutefois, différentes contraintes d'implantation, en particulier la garde au sol, empêche de positionner la biellette suffisamment bas et d'avoir une longueur de biellette suffisamment longue pour que le débattement de la petite articulation 12 soit dans un axe horizontal (axe en « X » du véhicule).

Comme très schématiquement représenté sur le dessin de la figure 3, une solution pourrait être d'incliner l'axe longitudinal « A » de la biellette anti-couple 10 en abaissant la petite articulation 12 de telle sorte que l'axe longitudinal de la biellette soit un peu plus tangent à la trajectoire référencée « T » de l'axe 12 de la biellette. Toutefois, dans le cadre d'une fixation de la grosse articulation à axe vertical, il est impossible d'incliner les faces du berceau qui prennent en chape la biellette. De plus, le fait d'incliner la biellette tout en maintenant la grosse articulation dans le plan horizontal crée un travail en torsion de l'élastomère (de la grosse articulation) avec des risques d'affaiblissement de la tenue en endurance et en prestation.

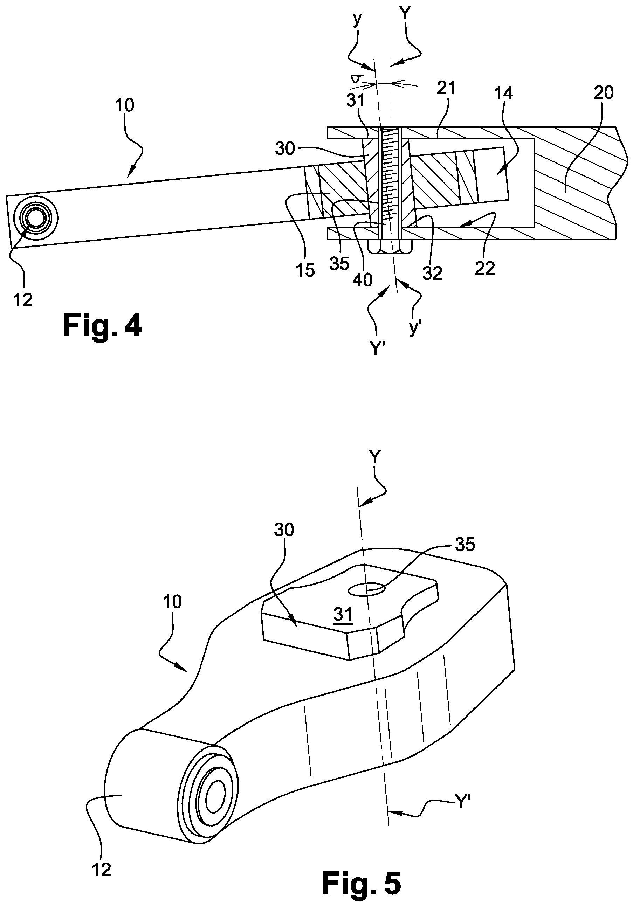

Pour surmonter les difficultés mentionnées ci-dessus, la présente invention fournit un dispositif de suspension nouveau dont un exemple de réalisation est représenté sur les dessins des figures 4 et 5.

Ce dispositif de suspension selon l'invention comporte une biellette anti-couple 10 à deux articulations 12 et 14, comme déjà mentionné, de type connu en soi, mais, contrairement aux biellettes anti-couple de l'art antérieur, la grosse articulation 14 de la biellette de la présente invention est liée au berceau référencé 20 du véhicule par l'intermédiaire d'un insert, métallique, de référence générale 30, dont les deux faces latérales 31 et 32, planes, parallèles, sont inclinées par rapport au plan perpendiculaire à son axe géométrique « yy' ». Cette inclinaison est d'un angle dit « angle d'orientation de la biellette » désigné par la référence « σ » et qui est voisin de 5° d'angle. Il résulte de cela que la biellette anti-couple 10 est inclinée par rapport à l'horizontale de l'angle d'orientation « σ ». Grâce aux plans inclinés des surfaces latérales 31 et 32 (forme « biseautée de l'insert 30), bien que la biellette anti-couple 10 soit inclinée par rapport à l'horizontale, l'interface de liaison entre la biellette 10 et le berceau 20 reste malgré cela dans un plan sensiblement horizontal.

La référence 15 désigne une masse en matériau souple, de préférence en élastomère, qui autorise un certain débattement relatif et un filtrage des vibrations.

Il importe de noter que le corps de la biellette 10 et les articulations sont celles d'une biellette anti-couple classique, c'est-à-dire que l'articulation en élastomère est orientée selon la direction longitudinale de la biellette favorisant, ainsi, un travail optimal de l'élastomère. Par rapport aux solutions de l'art antérieur, seul l'insert métallique 30 est modifié dans sa forme par la direction inclinée de ses deux sections d'extrémités.

La liaison de l'insert 30 est une liaison de type prise en chape, qui se fait sur deux surfaces planes en regard 21 et 22 du berceau 20 du véhicule.

L'insert 30 est rigidement fixé sur le berceau 20 par l'intermédiaire d'un alésage 35 de l'insert 30 pour le passage d'un moyen de fixation, de type vis de fixation 40. L'alésage 35 relie les deux faces latérales inclinées 31, 32 de l'insert 30 et est d'axe YY' perpendiculaire aux surfaces planes 21, 22 de prise en chape de l'insert sur le berceau 20.

En ce qui concerne le procédé de fabrication du dispositif selon l'invention, seul l'usinage ou le moulage de l'insert 30 est différent des procédés de réalisation des dispositifs équivalents classiques connus de l'art antérieur. Le moulage et l'adhérisation de l'élastomère peuvent être identiques à ceux d'une biellette horizontale.

Il importe de noter que le dispositif de suspension selon la présente invention s'applique mutatis mutandis à la suspension d'un groupe électro-propulseur de véhicule, en particulier de véhicule automobile.

Il importe également de noter que l'insert métallique peut être réalisé par exemple en aluminium, ou en acier ou encore en fonte.

La forme de l'insert métallique peut avantageusement être, à titre d'exemple, de forme cylindrique.

Le dispositif de suspension de groupe motopropulseur décrit ci-dessus dans un exemple de réalisation présente de nombreux avantages, parmi lesquels les avantages suivants :
- il réalise un gain en implantation, la réduction du débattement de la biellette permettant de réduire la taille de la fenêtre dans le berceau du véhicule,
- il réalise un gain en tenue en endurance, les bras de l'élastomère de la grosse articulation de la biellette étant moins sollicités en torsion,
- il réalise un gain en prestation par une meilleure mise en butée sous charge due essentiellement à la réduction de l'inclinaison de la biellette,
- il réalise un gain en masse par rapport aux dispositifs de suspension à biellette anti-couple de l'art antérieur, et
- il est économique, parce qu'il s'adapte à un berceau plus simple du véhicule et qu'il ne nécessite pas un biellette conventionnelle plus coûteuse parce que plus longue.

## Revendications

1. Dispositif de suspension d'un groupe motopropulseur de véhicule automobile, comportant un berceau (20) et au moins une biellette anti-couple (10) pouvant relier le groupe motopropulseur à la structure du véhicule par deux articulations (12, 14) entre lesquelles est interposée une masse en matériau souple et élastiquement déformable, lesdites deux articulations comprenant une première articulation (12), pouvant jouer un rôle de pivot sur le groupe motopropulseur et une seconde articulation (14), dite «grosse articulation », qui présente un encombrement supérieur à la première articulation et qui est prise en chape entre deux surfaces (21, 22) planes en regard sensiblement horizontales du berceau (20) du véhicule par l'intermédiaire d'un insert (30) d'axe géométrique (yy') perpendiculaire à l'axe longitudinal de la biellette anti-couple (10) et rigidement fixé sur le berceau (20), **caractérisé en ce que** deux faces latérales (31, 32) de l'insert (30) sont planes, parallèles, inclinées par rapport au plan perpendiculaire à l'axe géométrique (yy') de l'insert (30) d'un angle dit « angle d'orientation de la biellette » (« σ »), de telle sorte que, bien que la biellette anti-couple (10) soit inclinée par rapport à l'horizontale dudit angle d'orientation(« σ »), l'interface de liaison entre la biellette anti-couple (10) et le berceau (20) reste dans un plan sensiblement horizontal.

2. Dispositif de suspension selon la revendication 1, **caractérisé en ce que** l'insert (30) est rigidement fixé sur le berceau (20) par l'intermédiaire d'un alésage (35) de l'insert (30) pour le passage d'un moyen de fixation, ledit alésage (35) reliant les deux faces latérales (31, 32) de l'insert (30) et étant d'axe (YY') perpendiculaire auxdites surfaces planes (21, 22) de prise en chape du berceau (20).

3. Dispositif de suspension selon l'une quelconque des revendications 1 et 2, **caractérisé en ce que** ledit insert (30) est réalisé en métal.

4. Dispositif de suspension selon l'une quelconque des revendications 1 à 3, **caractérisé en ce que** ledit insert est de forme cylindrique.

5. Dispositif de suspension selon l'une quelconque des revendications 1 à 4, **caractérisé en ce que** ledit insert (30) est inséré dans une bague en élastomère (15) de ladite grosse articulation (14) de la biellette anti-couple (10), laquelle bague forme ladite masse en matériau souple et élastiquement déformable interposée entre les deux articulations (12, 14).

6. Dispositif de suspension selon la revendication 2, **caractérisé en ce que** ledit moyen de fixation est une vis de fixation (40).

7. Dispositif de suspension selon l'une quelconque des revendications 1 à 6, **caractérisé en ce que** ledit angle d'orientation de la biellette (« σ ») est de l'ordre de 5° d'angle.

8. Véhicule automobile, qui comprend un groupe motopropulseur monté sur la structure du véhicule, **caractérisé en ce que** ledit groupe motopropulseur est monté suspendu à ladite structure par un dispositif de suspension à biellette anti-couple (10) conforme à l'une quelconque des revendications précédentes.

## Patentansprüche

1. Vorrichtung zur Aufhängung (20) eines Antriebsstrangs eines Kraftfahrzeugs, die mindestens einen Anti-Drehmoment-Schwingarm (10) umfasst, der den Antriebsstrang mit der Struktur des Fahrzeugs anhand von zwei Anlenkungen (12, 14) verbinden kann, zwischen welchen eine Masse aus geschmeidigem und elastisch verformbarem Material eingefügt ist, wobei die zwei Anlenkungen eine erste Anlenkung (12) umfassen, die eine Rolle eines Zapfens auf dem Antriebsstrang spielen kann, und eine zweite Anlenkung (14), "große Anlenkung" genannt, die einen größeren Platzbedarf als die erste Anlenkung aufweist und zwischen zwei flachen Oberflächen (21, 22) in Gegenüberlage, die im Wesentlichen horizontal zu der Motoraufhängung (20) des Fahrzeugs sind, über einen Einsatz (30) mit geometrischer Achse (yy') senkrecht zu der Längsachse des Anti-Drehmoment-Schwingarms (10), und der starr auf der Motoraufhängung (20) befestigt ist, in die Gabel genommen ist, **dadurch gekennzeichnet, dass** die zwei seitlichen Flächen (31, 32) des Einsatzes (30) flach, parallel, in Bezug zu der Ebene senkrecht zu der geometrischen Achse (yy') des Einsatzes (30) um einen Winkel, "Ausrichtungswinkel des Schwingarms" ("σ") genannt, derart geneigt sind, dass, obwohl der Anti-Drehmoment-Schwingarm (10) in Bezug auf die Horizontale um den Ausrichtungswinkel ("σ") geneigt ist, die Verbindungsschnittfläche zwischen dem Anti-Drehmoment-Schwingarm (10) und der Motoraufhängung (20) in einer im Wesentlichen horizontalen Ebene bleibt.

2. Aufhängungsvorrichtung nach Anspruch 1, **dadurch gekennzeichnet, dass** der Einsatz (30) starr auf der Motoraufhängung (20) über eine Bohrung (35) des Einsatzes (30) für das Durchgehen eines Befestigungsmittels befestigt ist, wobei die Bohrung (35) die zwei seitlichen Flächen (31, 32) des Einsatzes (30) verbindet und die Achse (YY') senkrecht zu den flachen Oberflächen (21, 22) zum Aufnehmen in eine Gabel der Motoraufhängung (20) hat.

3. Aufhängungsvorrichtung nach einem der Ansprüche 1 und 2, **dadurch gekennzeichnet, dass** der Einsatz (30) aus Metall hergestellt ist.

4. Aufhängungsvorrichtung nach einem der Ansprüche 1 bis 3, **dadurch gekennzeichnet, dass** der Einsatz zylindrische Form hat.

5. Aufhängungsvorrichtung nach einem der Ansprüche 1 bis 4, **dadurch gekennzeichnet, dass** der Einsatz (30) in einen Ring aus Elastomer (15) der großen Anlenkung (14) des Anti-Drehmoment-Schwingarms (10) eingesetzt ist, wobei der Ring die Masse aus biegsamem und elastisch verformbarem Material bildet, die zwischen die zwei Anlenkungen (12, 14) eingefügt ist.

6. Aufhängungsvorrichtung nach Anspruch 2, **dadurch gekennzeichnet, dass** das Befestigungsmittel eine Befestigungsschraube (40) ist.

7. Aufhängungsvorrichtung nach einem der Ansprüche 1 bis 6, **dadurch gekennzeichnet, dass** der Ausrichtungswinkel des Schwingarms ("σ") in der Größenordnung eines Winkels von 5° liegt.

8. Kraftfahrzeug, das einen Antriebsstrang umfasst, der auf die Struktur des Fahrzeugs montiert ist, **dadurch gekennzeichnet, dass** der Antriebsstrang hängend an der Struktur durch eine Aufhängungsvorrichtung mit Anti-Drehmoment-Schwingarm (10) gemäß einem der vorhergehenden Ansprüche montiert ist.

## Claims

1. A device for the suspension of a powertrain of a motor vehicle, comprising a cradle (20) and at least one anti-torque rod (10) able to connect the powertrain to the structure of the vehicle by two articulations (12, 14), between which a mass of flexible and elastically deformable material is interposed, said two articulations including a first articulation (12), able to play a role of pivot on the powertrain, and a second articulation (14), designated "large articulation", which has a greater overall dimension than the first articulation and which is held in a fork-type arrangement between two flat substantially horizontal facing surfaces (21, 22) of the cradle (20) of the vehicle by means of an insert (30) of geometric axis (yy') perpendicular to the longitudinal axis of the anti-torque rod (10) and rigidly fixed on the cradle (20), **characterized in that** two lateral faces (31, 32) of the insert (30) are flat, parallel, inclined with respect to the perpendicular plane to the geometric axis (yy') of the insert by an angle designated "orientation angle of the rod" ("σ"), such that, although the anti-torque rod (10) is inclined with respect to the horizontal of said orientation angle ("σ"), the link interface between the anti-torque rod (10) and the cradle (20) remains in a substantially horizontal plane.

2. The suspension device according to Claim 1, **characterized in that** the insert (30) is rigidly fixed on the cradle (20) by means of a bore (35) of the insert (30) for the passage of a fixing means, said bore (35) connecting the two lateral faces (31, 32) of the insert (30) and being of axis (YY') perpendicular to said flat surfaces (21, 22) for holding the cradle (20) in a fork-type arrangement.

3. The suspension device according to any one of Claims 1 and 2, **characterized in that** said insert (30) is made from metal.

4. The suspension device according to any one of Claims 1 to 3, **characterized in that** said insert is of cylindrical shape.

5. The suspension device according to any one of Claims 1 to 4, **characterized in that** said insert (30) is inserted in an elastomer ring (15) of said large articulation (14) of the ant-torque rod (10), which ring forms said mass of flexible and elastically deformable material interposed between the two articulations (12, 14).

6. The suspension device according to Claim 2, **characterized in that** said fixing means is a fixing screw (40).

7. The suspension device according to any one of Claims 1 to 6, **characterized in that** said orientation angle of the rod ("σ") is in the order of an angle of 5°.

8. A motor vehicle, which includes a powertrain mounted on the structure of the vehicle, **characterized in that** said powertrain is mounted suspended to said structure by a suspension device with anti-torque rod (10) according to any one of the preceding claims.
